Europäisches Patentamt

European Patent Office

Office européen des brevets

(11) Numéro de publication: **0 490 780 B1**

(12) **FASCICULE DE BREVET EUROPEEN**

(45) Date de publication de fascicule du brevet: **07.06.95**

(51) Int. Cl.6: **C08K 13/02**, C08L 57/08, //(C08K13/02,5:07,5:09,5:13, 3:24)

(21) Numéro de dépôt: **91420404.5**

(22) Date de dépôt: **15.11.91**

(54) **Compositions stabilisées de polymère chloré.**

(30) Priorité: **10.12.90 FR 9015737**

(43) Date de publication de la demande:
**17.06.92 Bulletin 92/25**

(45) Mention de la délivrance du brevet:
**07.06.95 Bulletin 95/23**

(84) Etats contractants désignés:
**AT BE DE ES FR GB IT NL SE**

(56) Documents cités:
**EP-A- 0 391 811
EP-A- 0 453 380
WO-A-90/09962**

(73) Titulaire: **RHONE-POULENC CHIMIE
25, Ouai Paul Doumer
F-92408 Courbevoie Cédex (FR)**

(72) Inventeur: **Carette, Louis, 64, rue de l'Egalité
Résidence Rodin,
appartement 1411
F-92130 Issy Les Moulineaux (FR)**
Inventeur: **Pouenat, François
33, rue de Ranelagh
F-75016 Paris (FR)**

(74) Mandataire: **Ricalens, François et al
RHONE-POULENC CHIMIE,
Direction de la Propriéte Industrielle,
25, quai Paul Doumer
F-92408 Courbevoie Cédex (FR)**

Rank Xerox (UK) Business Services
(3.10/3.09/3.3.3)

## Description

La présente invention concerne de nouvelles compositions à base de polymère chloré, stabilisées à l'aide de stannates de zinc et/ou d'hydroxystannate de zinc.

Elle concerne également l'utilisation comme stabilisants thermiques des polymères chlorés de composés du zinc, choisis parmi les stannates de zinc et l'hydroxystannate de zinc.

Les polymères chlorés visés dans le présent texte sont notamment le polychlorure de vinyle (PVC), qui est le plus important ; le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

De manière générale tout type de PVC convient, quel que soit son mode de préparation, polymérisation en masse, en suspension, en dispersion ou de tout autre type, et quelle que soit sa viscosité intrinsèque.

Les homopolymères du chlorure de vinyle peuvent également être modifiés chimiquement, par exemple par chloration.

De nombreux copolymères du chlorure de vinyle peuvent également être stabilisés contre les effets de la chaleur, c'est-à-dire le jaunissement et la dégradation. Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène ; les acides maléique ou fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement ces copolymères contiennent au moins 50 % en poids de motifs chlorure de vinyle et de préférence au moins 80 % en poids de motifs chlorure de vinyle.

Les compositions selon l'invention peuvent également contenir des mélanges à base de polymère chloré contenant des quantités minoritaires d'autres polymères, comme les polyoléfines halogénées ou les copolymères acrylonitrile-butadiène-styrène.

Le PVC seul ou en mélange avec d'autres polymères est le polymère chloré le plus largement utilisé dans les compositions de l'invention.

La transformation à chaud des polymères chlorés, et plus particulièrement du PVC, ne peut s'effectuer sans l'adjonction de stabilisants thermiques.

En effet, lorsque l'on chauffe le polymère chloré aux températures de mise en oeuvre, on assiste à l'apparition de colorations qui altèrent son aspect, qui est un élément important dans de nombreux usages.

On remédie à cet inconvénient, à l'aide de stabilisants essentiellement constitués de composés métalliques ou organométalliques, susceptibles notamment de capter l'acide chlorhydrique résultant de la dégradation du polymère.

Ces stabilisants thermiques sont essentiellement des dérivés organiques du zinc ou du cadmium associés à des dérivés organiques du calcium, du baryum ou du magnésium.

Ils peuvent être accompagnés d'autres composés, appelés généralement costabilisants ou stabilisants secondaires, dont le but est de compléter, de renforcer leur action, en particulier sur les qualités d'aspect des produits finis.

C'est le cas des systèmes métalliques mixtes à base de dérivés de cadmium et de baryum ou de zinc et de baryum ou de zinc et de calcium, qui ont besoin d'être accompagnés de costabilisants tels que des composés époxydés, des phosphites organiques, des dihydropyridines et/ou des béta-dicétones.

Parmi ces systèmes métalliques, ceux qui contiennent des dérivés du cadmium sont de moins en moins utilisés, à cause des effets nocifs du cadmium.

Les formulations de polymères chlorés contenant des associations de dérivés organiques du zinc et du baryum ou de dérivés organiques du zinc et du calcium, avec des costabilisants organiques, conviennent généralement bien pour les applications telles que par exemple bouteilles ou films rigides transparents, profilés pour usage extérieur.

Mais dans certains cas : sévérité des conditions thermodynamiques de transformation, instabilité intrinsèque de certains polymères utilisés, il est nécessaire de renforcer l'efficacité des stabilisants habituels sur les propriétés d'aspect et surtout la permanence de cette efficacité, quand on aggrave et prolonge les sollicitations thermiques.

La présente invention se propose d'améliorer la stabilisation thermique des polymères chlorés, et plus particulièrement du PVC, en associant aux stabilisants organométalliques et aux costabilisants organiques connus un composé choisi parmi les stannates de zinc et l'hydroxystannate de zinc.

Plus précisément, la présente invention consiste en des compositions à base de polymère chloré, caractérisées en ce qu'elles contiennent :

- au moins un dérivé organique du zinc,

- au moins un dérivé organique du calcium, du baryum, du magnésium ou des lanthanides,
- au moins un stabilisant secondaire organique choisi parmi les béta-cétoaldéhydes, les béta-dicétones, les dihydro-1,4 pyridines monomères ou polymériques, les béta-cétoesters, les esters béta-aminocrotoniques, les esters mercaptocarboxyliques, les alpha-phényl-indoles,
- au moins un stannate de zinc et/ou un hydroxystannate de zinc.

Les composés organiques du zinc sont plus particulièrement les carboxylates et les phénolates de zinc.

Les plus couramment utilisés sont par exemple les sels de zinc des acides maléique, acétique, diacétique, propionique, hexanoïque, octanoïque, éthyl-2 hexanoïque, décanoïque, undécanoïque, laurique, myristique, palmitique, stéarique, oléïque, ricinoléïque, béhénique, hydroxystéarique, hydroxyundécanoïque, benzoïque, phénylacétique, paratertiobutylbenzoïque et salicylique ; les phénolates de zinc du phénol et des phénols substitués par un ou plusieurs radicaux alkyle, tels que les nonylphénols.

Pour des raisons pratiques ou pour des raisons économiques, on choisit de préférence parmi les composés organiques du zinc cités précédemment, le propionate de zinc, l'octanoate de zinc, l'éthyl-2 hexanoate de zinc, le laurate de zinc, le stéarate de zinc, l'oléate de zinc, le ricinoléate de zinc, le benzoate de zinc, le paratertiobutylbenzoate de zinc, le salicylate de zinc, le maléate de zinc et de mono(éthyl-2 hexyle), les nonylphénates de zinc.

Généralement les composés organiques du zinc représentent de 0,005 % à 1 % en poids par rapport au polymère chloré, et de préférence de 0,01 % à 0,6 % en poids.

Les composés organiques du calcium, du magnésium , du baryum et des lanthanides sont de préférence les carboxylates et les phénolates de ces métaux.

Les plus couramment utilisés sont par exemple les sels de calcium, de magnésium, de baryum et de lanthanides des acides maléique, acétique, diacétique, propionique, hexanoïque, octanoïque, éthyl-2 hexanoïque, décanoïque, undécanoïque, laurique, myristique, palmitique, stéarique, oléïque, ricinoléique, béhénique, hydroxystéarique, hydroxyundécanoïque, benzoïque, phénylacétique, paratertiobutylbenzoïque et salicylique ; les phénolates de calcium, de magnésium, de baryum et de lanthanides du phénol et des phénols substitués par un ou plusieurs radicaux alkyle, tels que les nonylphénols.

Pour des raisons pratiques ou pour des raisons économiques, on choisit de préférence parmi les composés organiques de calcium, de magnésium, de baryum et de lanthanides cités précédemment les sels des acides propionique, octanoïque, éthyl-2 hexanoïque, laurique, stéarique, oléïque, ricinoléïque, benzoïque, paratertiobutylbenzoïque, salicylique, du maléate de mono(éthyl-2 hexyle) ainsi que les nonylphénates de ces métaux.

Généralement les composés organiques du calcium, du magnésium, du baryum et des lanthanides représentent de 0,005 % à 5 % en poids par rapport au poids du polymère chloré et de préférence de 0,02 % à 2 % en poids.

Pour les applications alimentaires et notamment pour les bouteilles en PVC, on utilisera les composés organiques du calcium ou les mélanges composés organiques du calcium/composés organiques du magnésium.

Parmi les stabilisants secondaires organiques, les $\beta$-dicétones ou $\beta$-cétoaldéhydes sont tout particulièrement efficaces.

Ces $\beta$-dicétones ont été notamment décrites dans les brevets et certificats d'addition français publiés sous les numéros FR 2 292 227, FR 2 324 681, FR 2 351 149, FR 2 352 025, FR 2 383 988 et FR 2 456 132 et dans les brevets européens EP 0 040 286 et EP 0 046 161.

Comme exemples non limitatifs de telles $\beta$-dicétones, on peut citer le benzoylstéaroylméthane, le dibenzoylméthane, la benzoylacétone, la lauroylacétone, la décanoylacétone, le benzoyl méthyl-3 butanoylméthane, les méthoxycarbonylbenzoylbenzoylméthanes, les bis-$\beta$-dicétones telles que le bis(acétylacéto)-1,4 butane, le bis(benzoylacéto)-1,8 octane, le bis(acétylacéto)-1,4 benzène.

Les $\beta$-dicétones représentent généralement de 0,005 % à 5 % en poids par rapport au poids du polymère chloré et de préférence de 0,01 % à 2 % en poids.

Les dihydro-1,4 pyridines sont aussi des stabilisants organiques qui peuvent être utilisés dans les compositions de l'invention.

Ces composés sont généralement des dihydro-1,4 diméthyl-2,6 dicarboxylate-3,5 pyridines monomères, telles que celles qui sont décrites dans les brevets FR-A-2 239 496, FR-A-2 405 974 et FR-A-2 405 937 ou polymériques, telles que décrites dans le brevet EP-A-286 887.

Habituellement ces dihydro-1,4 pyridines sont efficaces à des teneurs de 0,01 % à 5 % en poids par rapport au poids de polymère chloré et de préférence de 0,05 % à 2 % en poids par poids.

On peut également utiliser conjointement les béta-dicétones ou béta-cétoaldéhydes avec les dihydro-1,4 pyridines. Les quantités globales de ces mélanges de composés sont alors celles indiquées respectivement pour chacun d'entre eux.

Parmi les autres stabilisants organiques qui peuvent être utilisés dans les compositions selon l'invention, on peut citer par exemple :

- les béta-cétoesters et plus particulièrement les esters des acides cétoacétiques, tels que décrits notamment dans les brevets FR-A-1 435 882 et US-A-2 669 548 ;
- le phényl-2 indole et ses dérivés, tels que ceux décrits dans les brevets FR-A-2 273 841, FR-A-2 275 461 et FR-A-2 313 422 ;
- les esters béta-aminocrotoniques, plus particulièrement les béta-aminocrotonates d'alkyle à longue chaîne, c'est-à-dire le plus souvent d'alkyle de $C_{12}$ à $C_{20}$ et les béta-amino-crotonates de thioalkylèneglycol ;
- les esters d'acides mercaptocarboxyliques et plus particulièrement :
  . les esters de l'acide thioglycolique tels que ceux décrits dans le brevet FR-A-2 459 816,
  . les diesters de l'acide thiomalique tels que ceux décrits dans le brevet EP-A-0 090 748,
  . les esters de l'acide mercapto-2 propionique tels que ceux décrits dans le brevet FR-A-2 552 440.

Les stabilisants organiques indiqués ci-dessus représentent de 0,01 % à 5 % en poids par rapport au poids du polymère chloré et de préférence de 0,05 % à 2 % en poids par poids.

Les stannates et hydrostannate de zinc sont plus particulièrement le métastannate de zinc $ZnSnO_3$, l'orthostannate de zinc $Zn_2O_4Sn$ et l'hydroxystannate de zinc $ZnSn(OH)_6$.

Ces composés sont connus en soi. On peut notamment se référer au "NOUVEAU TRAITE DE CHIMIE MINERALE, tome VIII, de P. PASCAL" pour leur préparation.

Ces formules sont généralement admises, mais il peut y avoir des divergences entre les différents auteurs, notamment en ce qui concerne l'hydroxystannate, qui est parfois représenté comme le trihydrate du métastannate de zinc : $ZnSnO_3, 3 H_2O$.

Le métastannate de zinc et l'hydroxystannate de zinc sont préférés dans les compositions selon l'invention.

Le stannate et/ou l'hydroxystannate de zinc représente généralement de 0,01 % à 5 % en poids par rapport au poids de polymère chloré, et de préférence de 0,05 à 3 % en poids par poids.

Pour les applications du type bouteilles, notamment pour l'eau, la quantité préférée de stannate et/ou d'hydroxystannate de zinc se situe de 0,05 % à 0,5 % en poids par poids de polymère chloré (PVC).

Outre leur rôle de costabilisants thermiques qui fait l'objet de la présente invention, les stannates de zinc et hydroxystannate de zinc ont un rôle connu d'ignifugeant. On peut donc augmenter notablement les quantités de ces composés dans le PVC, lorsque l'on souhaite obtenir le double effet de stabilisation thermique et d'ignifugation.

Les compositions de l'invention peuvent comporter d'autres stabilisants thermiques secondaires, minéraux tels que notamment les hydrotalcites et la dawsonite ou organiques tels que notamment les polyols et les phosphites.

Les hydrotalcites sont des carbonates ou sulfates alcalins mixtes de magnésium et d'aluminium. On peut utiliser notamment les hydrotalcites décrites dans le brevet FR-A-2 483 934.

La dawsonite est un carbonate basique d'aluminium et de sodium. C'est un carbonate cristallin monoclinique que l'on représente généralement sous la formule $NaAl(OH)_2CO_3$. Elle est décrite notamment dans les ouvrages généraux de chimie minérale, comme par exemple le "NOUVEAU TRAITE DE CHIMIE MINERALE, tome II, de P. PASCAL".

Ces stabilisants minéraux représentent généralement de 0 à 5 % en poids par rapport au polymère chloré et de préférence de 0,02 % à 2 % .

Les polyols ont généralement l'avantage d'allonger la durée de vie des polymères chlorés soumis à un traitement thermique.

Généralement il est préférable que les polyols utilisés aient un point d'ébullition supérieur à 150°C et de préférence supérieur à 170°C, à cause de la mise en oeuvre à température élevée des polymères chlorés.

A titre d'exemples de tels polyols on peut citer des triols comme le triméthylolpropane, le glycérol, l'hexanetriol-1,2,6, le butanetriol-1,2,4, le trishydroxyéthylisocyanurate ; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle.

Parmi ces polyols les préférés sont le xylitol, le mannitol, le sorbitol, le triméthylolpropane, le tétraméthylolcyclohexanol et les alcools polyvinyliques définis précédemment.

4

EP 0 490 780 B1

Lorsqu'il est présent dans les compositions selon l'invention, on utilise en général de 0,005 % à 1 % en poids de polyol par rapport au polymère chloré et de préférence de 0,01 % à 0,6 % en poids.

Les compositions selon l'invention peuvent comporter également des phosphites organiques, notamment des phosphites aliphatiques ou des phosphites aromatiques ou des phosphites mixtes aliphatiques et aromatiques.

Lorsqu'il est présent, le phosphite représente généralement de 0,05 % à 5 % en poids par rapport au polymère chloré et de préférence de 0,1 % à 2 % en poids.

Les compositions selon l'invention peuvent également comporter des adjuvants habituels tels que des antioxydants phénoliques ; des agents anti-UV tels que les benzophénones, les benzotriazoles ou les amines stériquement encombrées (habituellement connues sous le terme de HALS).

Les compositions de l'invention peuvent aussi comporter des époxydes, notamment des polyglycérides époxydés comme l'huile de soja époxydée, l'huile de lin époxydée, les huiles de poissons époxydées ou la talloil époxydée.

Mais pour éviter une diminution de l'indice de viscosité du polymère chloré, on utilise généralement le moins possible de telles huiles, selon l'emploi envisagé pour les compositions.

Habituellement lorsqu'ils sont présents, les époxydes représentent de 0,05 % à 5 % en poids par rapport au poids du polymère chloré et plus spécifiquement de 0,1 % à 2 % en poids.

Les compositions de l'invention peuvent être des formulations rigides, c'est-à-dire sans plastifiant ou semi-rigides, c'est-à-dire avec des teneurs en plastifiant réduites, telles que pour les applications dans le bâtiment ou pour la fabrication de bouteilles.

Elles peuvent également être des formulations plastifiées telles que pour la fabrication de films à usage agricole.

Les plastifiants utilisés sont des composés connus tels que par exemple des phtalates d'alkyle. Le plus souvent utilisé est le phtalate de dioctyle.

Lorsque les compositions contiennent un plastifiant, la teneur de celui-ci est généralement de 5 % à 120 % en poids par rapport au poids de polymère chloré.

De manière habituelle, l'incorporation des différents stabilisants ou adjuvants est faite sur le polymère chloré à l'état de poudre.

On peut bien entendu préparer un mélange de 2 ou plusieurs des composés constitutifs des compositions selon l'invention avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150 °C et 200 °C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples qui suivent illustrent l'invention.

EXEMPLES

On prépare les formulations suivantes :
- PVC en poudre préparé par polymérisation en suspension, ayant un indice de viscosité de 70 (K-Wert = 57) : 100 g
- renforçateur de choc (copolymère méthacrylate de méthyle/butadiène/styrène) : 8 g
- lubrifiant à base d'ester de colophane (cire E) 2,05 g
- huile de soja époxydée : 5 g
- octanoate de zinc (éthyl-2 hexanoate de Zn) : voir tableau
- stéarate de calcium : 0,2 g
- stéaroylbenzoylméthane 0,25 g
- métastannate de Zn ou hydroxystannate de Zn : voir tableau

Le PVC et les différents additifs sont préalablement mélangés à température ambiante dans un mélangeur rapide.

Le temps nécessaire à une bonne homogénéisation est de 5 min environ.

Les mélanges homogènes ainsi obtenus sont introduits dans un plastographe (de marque BRABENDER) constitué par une cuve chauffée, dans laquelle tournent des pales en contra-rotation, afin de malaxer le polymère et les additifs.

La cuve contient 32 g de composition ; la température est maintenue à 180°C et la vitesse de ratation des pales est de 60 tours/min.

Des prélèvements sont effectués après 5 min, 10 min et 15 min de malaxage dans ces conditions et la coloration des échantillons prélevés est mesurée et est exprimée en indice de jaune, selon la norme ASTM D 1925 (plus la valeur de cet indice est élevée, plus l'échantillon est coloré).

On poursuit le malaxage à chaud de chaque composition, jusqu'à ce que le PVC soit entièrement dégradé et prenne un aspect charbonneux (carbonisation).

L'efficacité des stabilisants est donc évalué par :
- la coloration (mesurée en indice de jaune) observée sur le premier prélèvement,
- la stabilité plus ou moins grande de la coloration des prélèvements suivants,
- le temps nécessaire pour atteindre l'état de carbonisation.

Le tableau ci-après rassemble les valeurs d'indice de jaune et la durée de carbonisation des formulations, en précisant la quantité de métastannate de Zn, d'hydroxystannate de Zn et d'octanoate de Zn qu'elles comportent.

Les exemples 1 et 2 sont des essais selon l'invention, tandis que les essais A à M sont présentés à titre de comparaison.

| Essais | Octanoate de Zn | Stannate de Zn | Hydroxy stannate de Zn | Indices de jaune Prélèvements à | | | Temps de carbonisation |
|---|---|---|---|---|---|---|---|
| | | | | 5 min | 10 min | 15 min | |
| exemple 1 | 0,1 g | 0,1 g | 0 | 30 | 41 | 65 | 65 min |
| exemple 2 | 0,1 g | 0 | 0,1 g | 28 | 29 | 55 | 65 min |
| essai A | 0,1 g | 0 | 0 | 29 | 44 | 68 | 60 min |
| essai B | 0 | 0,1 g | 0 | rouge | > 200 | > 200 | 65 min |
| essai C | 0 | 0 | 0,1 g | rouge | > 200 | > 200 | 65 min |
| essai D | 0,2 g | 0 | 0 | 40 | 55 | 65 | 20 min |
| essai E | 0 | 0,2 g | 0 | rouge | > 200 | > 200 | 65 min |
| essai F | 0 | 0 | 0,2 g | rouge | > 200 | > 200 | 65 min |
| essai G | 0,251 g | 0,065 g | 0 | 40 | 50 | noir | 15 min |
| essai H | 0,222 g | 0,165 g | 0 | 50 | 60 | 114 | 20 min |
| essai J | 0 | 0 | 0 | rouge | > 200 | > 200 | 65 min |
| essai K | 0 | 0 | 0 | rouge | > 200 | > 200 | 65 min |
| essai L | 0 | 0 | 0,08 g | rouge | > 200 | > 200 | 65 min |
| essai M | 0 | 0 | 0,18 g | rouge | > 200 | > 200 | 65 min |

On observe que l'addition de métastannate de Zn ou d'hydroxystannate de Zn (exemples 1 et 2) à une composition de bonne stabilité thermique selon l'art antérieur (essai A) améliore le temps avant carbonisation (65 min au lieu de 60 min) et surtout ralentit l'évolution de la coloration.

Cela reste valable si l'on compare les exemples 1 et 2, respectivement avec les essais D, E et F, qui comportent des quantités pondérales globales de composés du Zn égales : on note même qu'avec 0,2 g d'octanoate de Zn, les résultats obtenus sont moins bons qu'avec 0,1 g (essai D comparé à l'essai A).

Enfin, la comparaison avec des quantités molaires globales en Zn égales, montre que l'association octanoate de Zn/métastannate de Zn ou hydroxystannate de Zn, conduit aux meilleurs résultats, alors que le métastannate de Zn ou l'hydroxystannate de Zn seul conduit à des compositions inutilisables (rouges dès le premier prélèvement) et que l'octanoate de Zn seul conduit à une évolution plus rapide de la coloration et à un temps de carbonisation très court.

**Revendications**

**Revendications pour les Etats contractants suivants : AT, BE, DE, FR, GB, IT, NL, SE**

1. Compositions à base de polymère chloré, caractérisées en ce qu'elles contiennent :
   - au moins un dérivé organique du zinc,
   - au moins un dérivé organique du calcium, du baryum, du magnésium ou des lanthanides,
   - au moins un stabilisant secondaire organique choisi parmi les béta-cétoaldéhydes, les béta-dicétones, les dihydro-1,4 pyridines monomères ou polymériques, les béta-cétoesters, les esters mercapto-carboxyliques, les alpha-phényl-indoles,
   - au moins un stannate de zinc et/ou un hydroxystannate de zinc.

2. Compositions selon la revendication 1, caractérisées en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

3. Compositions selon l'une des revendications 1 ou 2, caractérisées en ce qu'elles contiennent du métastannate de zinc et/ou de l'hydroxystannate de zinc.

4. Compositions selon l'une des revendications 1 à 3, caractérisées en ce que le composé organique du zinc est choisi parmi les carboxylates et les phénolates de zinc.

5. Compositions selon l'une des revendications 1 à 4, caractérisées en ce que le composé organique du calcium, du magnésium, du baryum et des lanthanides est choisi parmi les carboxylates et les phénolates de ces métaux.

6. Compositions selon l'une des revendications 1 à 5, caractérisées en ce que :
   - le composé organique du zinc représente de 0,005 % à 1 % en poids par rapport au polymère chloré, et de préférence de 0,01 % à 0,6 % en poids ;
   - le composé organique du calcium, du magnésium, du baryum et des lanthanides représente de 0,005 % à 5 % en poids par rapport au poids du polymère chloré et de préférence de 0,02 % à 2 % en poids.

7. Compositions selon l'une des revendications 1 à 6, caractérisées en ce qu'elles contiennent de 0,01 % à 5 % en poids de stannate de zinc et/ou d'hydroxystannate de zinc par rapport au poids du polymère chloré et préférentiellement de 0,05 % à 3 % en poids.

8. Compositions selon l'une des revendications 1 à 6, caractérisées en ce qu'elles contiennent de 0,05 % à 0,5 % en poids de stannate de zinc et/ou d'hydroxystannate de zinc par rapport au poids du polymère chloré.

9. Compositions selon l'une des revendications 1 à 8, caractérisées en ce qu'elles contiennent au moins une $\beta$-dicétone ou un $\beta$-cétoaldéhyde.

10. Compositions selon la revendication 9, caractérisées en ce que la $\beta$-dicétone est choisie parmi le benzoylstéaroylméthane, le dibenzoylméthane, la benzoylacétone, la lauroylacétone, la décanoylacétone, le benzoyl méthyl-3 butanoylméthane, les méthoxycarbonylbenzoylbenzoylméthanes, les bis-$\beta$-dicétones telles que le bis(acétylacéto)-1,4 butane, le bis(benzoylacéto)-1,8 octane, le bis(acétylacéto)-1,4 benzène.

**11.** Compositions selon l'une des revendications 9 ou 10, caractérisées en ce que la $\beta$-dicétone représente de 0,005 % à 5 % en poids par rapport au poids du polymère chloré et de préférence de 0,01 % à 2 % en poids par poids.

**12.** Compositions selon l'une des revendications 1 à 11, caractérisées en ce qu'elles contiennent de 0,01 % à 5 % en poids de dihydro-1,4 pyridine monomère ou polymérique par rapport au poids de polymère chloré et de préférence de 0,05 % à 2 % en poids par poids.

**13.** Compositions selon l'une des revendications 1 à 11, caractérisées en ce qu'elles contiennent au moins un stabilisant organique choisi parmi :
- les béta-cétoesters et plus particulièrement les esters des acides cétoacétiques,
- le phényl-2 indole et ses dérivés,
- les esters béta-aminocrotoniques, plus particulièrement les béta-aminocrotonates d'alkyle de $C_{12}$ à $C_{20}$ et les béta-amino-crotonates de thioalkylèneglycol,
- les esters d'acides mercaptocarboxyliques et plus particulièrement :
  . les esters de l'acide thioglycolique,
  . les diesters de l'acide thiomalique,
  . les esters de l'acide mercapto-2 propionique.

**14.** Compositions selon la revendication 13, caractérisées en ce que le stabilisant organique représente de 0,01 % à 5 % en poids par rapport au poids du polymère chloré et de préférence de 0,05 % à 2 % en poids par poids.

**15.** Compositions selon l'une des revendications 1 à 14, caractérisées en ce qu'elles contiennent au moins un stabilisant minéral, choisi parmi les hydrotalcites et la dawsonite.

**16.** Compositions selon la revendication 15, caractérisées en ce que le stabilisant minéral représente jusqu'à 5 % en poids par rapport au poids du polymère chloré et de préférence de 0,02 % à 2 % en poids par poids.

**Revendications pour l'Etat contractant suivant : ES**

**1.** Procédé de stabilisation de polymère chloré, caractérisé en ce que l'on ajoute audit polymère :
- au moins un dérivé organique du zinc,
- au moins un dérivé organique du calcium, du baryum, du magnésium ou des lanthanides,
- au moins un stabilisant secondaire organique choisi parmi les béta-cétoaldéhydes, les béta-dicétones, les dihydro-1,4 pyridines monomères ou polymériques, les béta-cétoesters, les esters mercapto-carboxyliques, les alpha-phényl-indoles,
- au moins un stannate de zinc et/ou un hydroxystannate de zinc.

**2.** Procédé selon la revendication 1, caractérisé en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

**3.** Procédé selon l'une des revendications 1 ou 2, caractérisé en ce que l'on ajoute du métastannate de zinc et/ou de l'hydroxystannate de zinc.

**4.** Procédé selon l'une des revendications 1 à 3, caractérisé en ce que le composé organique du zinc est choisi parmi les carboxylates et les phénolates de zinc.

**5.** Procédé selon l'une des revendications 1 à 4, caractérisé en ce que le composé organique du calcium, du magnésium, du baryum et des lanthanides est choisi parmi les carboxylates et les phénolates de ces métaux.

**6.** Procédé selon l'une des revendications 1 à 5, caractérisé en ce que :
- le composé organique du zinc représente de 0,005 % à 1 % en poids par rapport au polymère chloré, et de préférence de 0,01 % à 0,6 % en poids ;

9

- le composé organique du calcium, du magnésium, du baryum et des lanthanides représente de 0,005 % à 5 % en poids par rapport au poids du polymère chloré et de préférence de 0,02 % à 2 % en poids.

7. Procédé selon l'une des revendications 1 à 6, caractérisé en ce que l'on ajoute de 0,01 % à 5 % en poids de stannate de zinc et/ou d'hydroxystannate de zinc par rapport au poids du polymère chloré et préférentiellement de 0,05 % à 3 % en poids.

8. Procédé selon l'une des revendications 1 à 6, caractérisé en ce que l'on ajoute de 0,05 % à 0,5 % en poids de stannate de zinc et/ou d'hydroxystannate de zinc par rapport au poids du polymère chloré.

9. Procédé selon l'une des revendications 1 à 8, caractérisé en ce que l'on ajoute au moins une $\beta$-dicétone ou un $\beta$-cétoaldéhyde.

10. Procédé selon la revendication 9, caractérisé en ce que la $\beta$-dicétone est choisie parmi le benzoylstéaroylméthane, le dibenzoylméthane, la benzoylacétone, la lauroylacétone, la décanoylacétone, le benzoyl méthyl-3 butanoylméthane, les méthoxycarbonylbenzoylbenzoylméthanes, les bis-$\beta$-dicétones telles que le bis(acétylacéto)-1,4 butane, le bis(benzoylacéto)-1,8 octane, le bis(acétylacéto)-1,4 benzène.

11. Procédé selon l'une des revendications 9 ou 10, caractérisé en ce que la $\beta$-dicétone représente de 0,005 % à 5 % en poids par rapport au poids du polymère chloré et de préférence de 0,01 % à 2 % en poids par poids.

12. Procédé selon l'une des revendications 1 à 11, caractérisé en ce que l'on ajoute de 0,01 % à 5 % en poids de dihydro-1,4 pyridine monomère ou polymérique par rapport au poids de polymère chloré et de préférence de 0,05 % à 2 % en poids par poids.

13. Procédé selon l'une des revendications 1 à 11, caractérisé en ce que l'on ajoute au moins un stabilisant organique choisi parmi :
    - les béta-cétoesters et plus particulièrement les esters des acides cétoacétiques,
    - le phényl-2 indole et ses dérivés,
    - les esters béta-aminocrotoniques, plus particulièrement les béta-aminocrotonates d'alkyle de $C_{12}$ à $C_{20}$ et les béta-amino-crotonates de thioalkylèneglycol,
    - les esters d'acides mercaptocarboxyliques et plus particulièrement :
        . les esters de l'acide thioglycolique,
        . les diesters de l'acide thiomalique,
        . les esters de l'acide mercapto-2 propionique.

14. Procédé selon la revendication 13, caractérisé en ce que le stabilisant organique représente de 0,01 % à 5 % en poids par rapport au poids du polymère chloré et de préférence de 0,05 % à 2 % en poids par poids.

15. Procédé selon l'une des revendications 1 à 14, caractérisé en ce que l'on ajoute au moins un stabilisant minéral, choisi parmi les hydrotalcites et la dawsonite.

16. Procédé selon la revendication 15, caractérisé en ce que le stabilisant minéral représente jusqu'à 5 % en poids par rapport au poids du polymère chloré et de préférence de 0,02 % à 2 % en poids par poids.

**Claims**
**Claims for the following Contracting States : AT, BE, DE, FR, GB, IT, NL, SE**

1. Compositions based on chlorine-containing polymer, characterized in that they contain:
    - at least one organic derivative of zinc,
    - at least one organic derivative of calcium, barium, magnesium or of the lanthanides,
    - at least one organic secondary stabilizer chosen from beta-ketoaldehydes, beta-diketones, 1,4-dihydropyridine monomers or polymers, beta-ketoesters, mercaptocarboxylic esters and alpha-phenylindoles, and
- at least one zinc stannate and/or one zinc hydroxystannate.

2. Compositions according to Claim 1, characterized in that the chlorine-containing polymer is chosen from polyvinyl chloride, polyvinylidene chloride, copolymers containing predominantly vinyl chloride units obtained from vinyl chloride and other monomers, and mixtures of polymers or copolymers in which a predominant portion is obtained from vinyl chloride.

3. Compositions according to one of Claims 1 or 2, characterized in that they contain zinc metastannate and/or zinc hydroxystannate.

4. Compositions according to one of Claims 1 to 3, characterized in that the organic zinc compound is chosen from zinc carboxylates and zinc phenolates.

5. Compositions according to one of Claims 1 to 4, characterized in that the organic compound of calcium, magnesium, barium and of the lanthanides is chosen from the carboxylates and the phenolates of these metals.

6. Compositions according to one of Claims 1 to 5, characterized in that:
- the organic zinc compound represents from 0.005 % to 1 % by weight relative to the chlorine-containing polymer, and preferably from 0.01 % to 0.6 % by weight; and
- the organic compound of calcium, magnesium, barium and of the lanthanides represents from 0.005 % to 5 % by weight relative to the weight of the chlorine-containing polymer, and preferably from 0.02 % to 2 % by weight.

7. Compositions according to one of Claims 1 to 6, characterized in that they contain from 0.01 % to 5 % by weight of zinc stannate and/or zinc hydroxystannate relative to the weight of the chlorine-containing polymer, and preferentially from 0.05 % to 3 % by weight.

8. Compositions according to one of Claims 1 to 6, characterized in that they contain from 0.05 % to 0.5 % by weight of zinc stannate and/or zinc hydroxystannate relative to the weight of the chlorine-containing polymer.

9. Compositions according to one of Claims 1 to 8, characterized in that they contain at least one $\beta$-diketone or one $\beta$-ketoaldehyde.

10. Compositions according to Claim 9, characterized in that the $\beta$-diketone is chosen from benzoylstearoylmethane, dibenzoylmethane, benzoylacetone, lauroylacetone, decanoylacetone, benzoyl-3-methylbutanoylmethane, methoxycarbonylbenzoylbenzoylmethanes, and bis-$\beta$-diketones such as 1,4-bis(acetylaceto)butane, 1,8-bis(benzoylaceto)octane and 1,4-bis(acetylaceto)benzene.

11. Compositions according to one of Claims 9 and 10, characterized in that the $\beta$-diketone represents from 0.005 % to 5 % by weight relative to the weight of the chlorine-containing polymer, and preferably from 0.01 % to 2 % weight/weight.

12. Compositions according to one of Claims 1 to 11, characterized in that they contain from 0.01 % to 5 % by weight of 1,4-dihydropyridine monomer or polymer relative to the weight of chlorine-containing polymer, and preferably from 0.05 % to 2 % weight/weight.

13. Compositions according to one of Claims 1 to 11, characterized in that they contain at least one organic stabilizer chosen from:
- beta-ketoesters and more particularly ketoacetic acid esters,
- 2-phenylindole and its derivatives,
- beta-aminocrotonic esters, more particularly $C_{12}$ to $C_{20}$-alkyl beta-aminocrotonates and thioalkylene glycol beta-aminocrotonates, and
- mercaptocarboxylic acid esters and more particularly :
  - thioglycolic acid esters,
  - thiomalic acid diesters, and

EP 0 490 780 B1

- 2-mercaptopropionic acid esters.

**14.** Compositions according to Claim 13, characterized in that the organic stabilizer represents from 0.01 % to 5 % by weight relative to the weight of the chlorine-containing polymer, and preferably from 0.05 % to 2 % weight/weight.

**15.** Compositions according to one of Claims 1 to 14, characterized in that they contain at least one inorganic stabilizer chosen from hydrotalcites and dawsonite.

**16.** Compositions according to Claim 15, characterized in that the inorganic stabilizer represents up to 5 % by weight relative to the weight of the chlorine-containing polymer and preferably from 0.02 % to 2 % weight/weight.

**Claims for the following Contracting State : ES**

**1.** Process for stabilizing a chlorine-containing polymer, characterized in that:
- at least one organic derivative of zinc,
- at least one organic derivative of calcium, barium, magnesium or of the lanthanides,
- at least one organic secondary stabilizer chosen from beta-ketoaldehydes, beta-diketones, 1,4-dihydropyridine monomers or polymers, beta-ketoesters, mercaptocarboxylic esters and alpha-phenylindoles, and
- at least one zinc stannate and/or one zinc hydroxystannate, are added to the said polymer.

**2.** Process according to Claim 1, characterized in that the chlorine-containing polymer is chosen from polyvinyl chloride, polyvinylidene chloride, copolymers containing predominantly vinyl chloride units obtained from vinyl chloride and other monomers; and mixtures of polymers or copolymers in which a predominant portion is obtained from vinyl chloride.

**3.** Process according to one of Claims 1 or 2, characterized in that zinc metastannate and/or zinc hydroxystannate is/are added.

**4.** Process according to one of Claims 1 to 3, characterized in that the organic zinc compound is chosen from zinc carboxylates and zinc phenolates.

**5.** Process according to one of Claims 1 to 4, characterized in that the organic compound of calcium, magnesium, barium and of the lanthanides is chosen from the carboxylates and the phenolates of these metals.

**6.** Process according to one of Claims 1 to 5, characterized in that:
- the organic zinc compound represents from 0.005 % to 1 % by weight relative to the chlorine-containing polymer, and preferably from 0.01 % to 0.6 % by weight; and
- the organic compound of calcium, magnesium, barium and of the lanthanides represents from 0.005 % to 5 % by weight relative to the weight of the chlorine-containing polymer, and preferably from 0.02 % to 2 % by weight.

**7.** Process according to one of Claims 1 to 6, characterized in that from 0.01 % to 5 % by weight of zinc stannate and/or zinc hydroxystannate relative to the weight of the chlorine-containing polymer, and preferentially from 0.05 % to 3 % by weight is/are added.

**8.** Process according to one of Claims 1 to 6, characterized in that from 0.05 % to 0.5 % by weight of zinc stannate and/or zinc hydroxystannate relative to the weight of the chlorine-containing polymer is/are added.

**9.** Process according to one of Claims 1 to 8, characterized in that at least one $\beta$-diketone or one $\beta$-ketoaldehyde is added.

**10.** Process according to Claim 9, characterized in that the $\beta$-diketone is chosen from benzoylstearoylmethane, dibenzoylmethane, benzoylacetone, lauroylacetone, decanoylacetone, benzoyl-3-methyl-

12

butanoylmethane, methoxycarbonylbenzoylbenzoylmethanes, and bis-$\beta$-diketones such as 1,4-bis-(acetylaceto)butane, 1,8-bis(benzoylaceto)octane and 1,4-bis(acetylaceto)benzene.

11. Process according to one of Claims 9 or 10, characterized in that the $\beta$-diketone represents from 0.005 % to 5 % by weight relative to the weight of the chlorine-containing polymer, and preferably from 0.01 % to 2 % weight/weight.

12. Process according to one of Claims 1 to 11, characterized in that from 0.01 % to 5 % by weight of 1,4-dihydropyridine monomer or polymer relative to the weight of chlorine-containing polymer, and preferably from 0.05 % to 2 % weight/weight is added.

13. Process according to one of Claims 1 to 11, characterized in that at least one organic stabilizer chosen from:
    - beta-ketoesters and more particularly ketoacetic acid esters,
    - 2-phenylindole and its derivatives,
    - beta-aminocrotonic esters, more particularly $C_{12}$ to $C_{20}$-alkyl beta-aminocrotonates and thioalkylene glycol beta-aminocrotonates, and
    - mercaptocarboxylic acid esters and more particularly :
        - thioglycolic acid esters,
        - thiomalic acid diesters, and
        - 2-mercaptopropionic acid esters is added.

14. Process according to Claim 13, characterized in that the organic stabilizer represents from 0.01 % to 5 % by weight relative to the weight of the chlorine-containing polymer, and preferably from 0.05 % to 2 % weight/weight.

15. Process according to one of Claims 1 to 14, characterized in that at least one inorganic stabilizer chosen from hydrotalcites and dawsonite is added.

16. Process according to Claim 15, characterized in that the inorganic stabilizer represents up to 5 % by weight relative to the weight of the chlorine-containing polymer and preferably from 0.02 % to 2 % weight/weight.

**Patentansprüche**

**Patentansprüche für folgende Vertragsstaaten : AT, BE, DE, FR, GB, IT, NL, SE**

1. Massen auf der Basis eines chlorierten Polymeren, dadurch gekennzeichnet, daß sie enthalten:
    - mindestens eine organische Zinnverbindung,
    - mindestens eine organische Calcium- Barium- Magnesium- oder Lanthanidenverbindung,
    - mindestens einen sekundären organischen Stabilisator, ausgewählt aus den $\beta$-Ketoaldehyden, $\beta$-Diketonen, Monomeren oder Polymeren von 1,4-Dihydropyridinen, $\beta$-Ketoestern Mercapto-carbonsäureestern und $\alpha$-Phenylindolen,
    - mindestens ein Zinkstannat und/oder Zinkhydroxystannat.

2. Massen nach Anspruch 1, dadurch gekennzeichnet daß das chlorierte Polymere ausgewählt ist aus Polyvinylchlorid und Polyvinylidenchlorid; den Copolymeren mit überwiegend Vinylchlorid-Einheiten, erhalten ausgehend von Vinylchlorid und anderen Monomeren; Gemischen von Polymeren oder Copolymeren, von denen ein überwiegender Teil ausgehend von Vinylchlorid erhalten worden ist.

3. Massen nach einem der Ansprüche 1 oder 2, dadurch gekennzeichnet, daß sie Zinkmetastannat und/oder Zinkhydroxystannat enthalten.

4. Massen nach einem der Ansprüche 1 bis 3, dadurch gekennzeichnet, daß die organische Zinkverbindung aus den Zinkcarboxylaten und Zinkphenolaten ausgewählt ist.

5. Massen nach einem der Ansprüche 1 bis 4, dadurch gekennzeichnet, daß die organische Calcium-, Magnesium-, Barium- und Lanthanidenverbindung aus den Carboxylaten und Phenolaten dieser Metalle ausgewählt ist.

**6.** Massen nach einem der Ansprüche 1 bis 5, dadurch gekennzeichnet, daß:
- die organische Zinkverbindung 0,005 bis 1 Gew.-%, bezogen auf das chlorierte Polymere, vorzugsweise 0,01 bis 0,6 Gew.-%, ausmacht:
- die organische Calcium-, Magnesium, Barium- und Lathanidenverbindung 0,005 bis 5 Gew.-%, bezogen auf das Gewicht des chlorierten Polymeren, und vorzugsweise 0,02 bis 2 Gew.-% ausmacht.

**7.** Massen nach einem der Ansprüche 1 bis 6, dadurch gekennzeichnet, daß sie 0,01 bis 5 Gew.-% Zinkstannat und/oder Zinkhydroxystannat, bezogen auf das Gewicht des chlorierten Polymeren, und vorzugsweise 0,05 bis 3 Gew.-% enthalten.

**8.** Massen nach einem der Ansprüche 1 bis 6, dadurch gekennzeichnet, daß sie 0,05 bis 0,5 Gew.-% Zinkstannat und/oder Zinkhydroxystannat, bezogen auf das Gewicht des chlorierten Polymeren, enthalten.

**9.** Massen nach einem der Ansprüche 1 bis 8, dadurch gekennzeichnet, daß sie mindestens ein $\beta$-Diketon oder einen $\beta$-Ketoaldehyd enthalten.

**10.** Massen nach Anspruch 9, dadurch gekennzeichnet, daß das $\beta$-Diketon ausgewählt ist aus Benzoylstearoylmethan, Dibenzoylmethan, Benzoylaceton, Lauroylaceton, Decanoylaceton, Benzoyl-3-methyl-butanoylmethan, den Methoxycarbonylbenzoylbenzoylmethanen, den Bis-$\beta$-diketonen wie 1,4-Bis-(acetylaceto)butan, 1,8-Bis(benzoylaceto)octan und 1,4-Bis(acetylaceto)benzol.

**11.** Massen nach einem der Ansprüche 9 oder 10, dadurch gekennzeichnet, daß das $\beta$-Diketon 0,005 bis 5 Gew.-%, bezogen auf das Gewicht des chlorierten Polymeren und vorzugsweise 0,01 bis 2 Gew.-%, bezogen auf das Gewicht, ausmacht.

**12.** Massen nach einem der Ansprüche 1 bis 11, dadurch gekennzeichnet, daß sie 0,01 bis 5 Gew.-% monomeres oder polymeres 1,4-Dihydropyridin, bezogen auf das Gewicht des chlorierten Polymeren und vorzugsweise 0,05 bis 2 Gew.-%, bezogen auf das Gewicht, enthalten.

**13.** Massen nach einem der Ansprüche 1 bis 11, dadurch gekennzeichnet, daß sie mindestens einen organischen Stabilisator enthalten, ausgewählt aus:
- $\beta$-Ketoestern und insbesondere Estern der Ketoessigsäuren,
- 2-Phenylindol und seinen Derivaten,
- $\beta$-Aminocrotonsäureestern, insbesondere $C_{12}$- bis $C_{20}$-Alkyl-$\beta$-aminocrotonaten und Thioalkylenglykol-$\beta$-aminocrotonaten,
- Estern der Mercaptocarbonsäuren und insbesondere:
  . Estern der Thioglykolsäure,
  . Diestern der Thioäpfelsäure,
  . Estern der 2-Mercaptopropionsäure.

**14.** Massen nach Anspruch 13, dadurch gekennzeichnet, daß der organische Stabilisator 0,01 bis 5 Gew.-%, bezogen auf das Gewicht des chlorierten Polymeren, und vorzugsweise 0,05 bis 2 Gew.-% je Gewicht ausmacht.

**15.** Massen nach einem der Ansprüche 1 bis 14, dadurch gekennzeichnet, daß sie mindestens einen mineralischen Stabilisator, ausgewählt aus den Hydrotalkiten und Dawsonit, enthalten.

**16.** Massen nach Anspruch 15, dadurch gekennzeichnet, daß der mineralische Stabilisator bis zu 5 Gew.-%, bezogen auf das Gewicht des chlorierten Polymeren, und vorzugsweise 0,02 bis 2 Gew.-% je Gewicht ausmacht.

**Patentansprüche für folgenden Vertragsstaat : ES**

**1.** Verfahren zur Stabilisierung eines chlorierten Polymeren, dadurch gekennzeichnet, daß man den Polymeren zusetzt:
- mindestens eine organische Zinnverbindung,

- mindestens eine organische Calcium-, Barium-, Magnesium- oder Lanthanidenverbindung,
- mindestens einen sekundären organischen Stabilisator, ausgewählt aus den $\beta$-Ketoaldehyden, $\beta$-Diketonen, Monomeren oder Polymeren von 1,4-Dihydropyridinen, $\beta$-Ketoestern, Mercapto-carbonsäureestern und $\alpha$-Phenylindolen,
- mindestens ein Zinkstannat und/oder Zinkhydroxystannat.

2. Verfahren nach Anspruch 1, dadurch gekennzeichnet, daß das chlorierte Polymere ausgewählt ist aus Polyvinylchlorid und Polyvinylidenchlorid; den Copolymeren mit überwiegend Vinylchlorid-Einheiten, erhalten ausgehend von Vinylchlorid und anderen Monomeren; Gemischen von Polymeren oder Copolymeren, von denen ein überwiegender Teil ausgehend von Vinylchlorid erhalten worden ist.

3. Verfahren nach einem der Ansprüche 1 oder 2, dadurch gekennzeichnet, daß man Zinkmetastannat und/oder Zinkhydroxystannat zusetzt.

4. Verfahren nach einem der Ansprüche 1 bis 3, dadurch gekennzeichnet, daß die organische Zinkverbindung aus den Zinkcarboxylaten und Zinkphenolaten ausgewählt wird.

5. Verfahren nach einem der Ansprüche 1 bis 4, dadurch gekennzeichnet, daß die organische Calcium-, Magnesium-, Barium- und Lanthanidenverbindung aus den Carboxylaten und Phenolaten dieser Metalle ausgewählt wird.

6. Verfahren nach einem der Ansprüche 1 bis 5, dadurch gekennzeichnet, daß:
   - die organische Zinkverbindung 0,005 bis 1 Gew.-%, bezogen auf das chlorierte Polymere, vorzugsweise 0,01 bis 0,6 Gew.-%, ausmacht;
   - die organische Calcium-, Magnesium, Barium- und Lathanidenverbindung 0,005 bis 5 Gew.-%, bezogen auf das Gewicht des chlorierten Polymeren, und vorzugsweise 0,02 bis 2 Gew.-% ausmacht.

7. Verfahren nach einem der Ansprüche 1 bis 6, dadurch gekennzeichnet, daß man 0,01 bis 5 Gew.-% Zinkstannat und/oder Zinkhydroxystannat, bezogen auf das Gewicht des chlorierten Polymeren, und vorzugsweise 0,05 bis 3 Gew.-% zusetzt.

8. Verfahren nach einem der Ansprüche 1 bis 6, dadurch gekennzeichnet, daß man 0,05 bis 0,5 Gew.-% Zinkstannat und/oder Zinkhydroxystannat, bezogen auf das Gewicht des chlorierten Polymeren, zusetzt.

9. Verfahren nach einem der Ansprüche 1 bis 8, dadurch gekennzeichnet, daß man mindestens ein $\beta$-Diketon oder einen $\beta$-Ketoaldehyd zusetzt.

10. Verfahren nach Anspruch 9, dadurch gekennzeichnet, daß das $\beta$-Diketon ausgewählt wird aus Benzoylstearoylmethan, Dibenzoylmethan, Benzoylaceton, Lauroylaceton, Decanoylaceton, Benzoyl-3-methyl-butanoylmethan, den Methoxycarbonylbenzoylbenzoylmethanen, den Bis-$\beta$-diketonen wie 1,4-Bis-(acetylaceto)butan, 1,8-Bis(benzoylaceto)octan und 1,4-Bis(acetylaceto)benzol.

11. Verfahren nach einem der Ansprüche 9 oder 10, dadurch gekennzeichnet, daß das $\beta$-Diketon 0,005 bis 5 Gew.-%, bezogen auf das Gewicht des chlorierten Polymeren. und vorzugsweise 0,01 bis 2 Gew.-% je Gewicht ausmacht.

12. Verfahren nach einem der Ansprüche 1 bis 11, dadurch gekennzeichnet, daß man 0,01 bis 5 Gew.-% monomeres oder polymeres 1,4-Dihydropyridin, bezogen auf das Gewicht des chlorierten Polymeren, und vorzugsweise 0,05 bis 2 Gew.-% je Gewicht zusetzt.

13. Verfahren nach einem der Ansprüche 1 bis 11, dadurch gekennzeichnet, daß man mindestens einen organischen Stabilisator zusetzt, ausgewählt aus:
   - $\beta$-Ketoestern und insbesondere Estern der Ketoessigsäuren,
   - 2-Phenylindol und seinen Derivaten,
   - $\beta$-Aminocrotonsäureestern, insbesondere $C_{12}$- bis $C_{20}$-Alkyl-$\beta$-aminocrotonaten und Thioalkyleng-lykol-$\beta$-aminocrotonaten,
   - Estern der Mercaptocarbonsäuren und insbesondere;

. Estern der Thioglykolsäure,
. Diestern der Thioäpfelsäure,
. Estern der 2-Mercaptopropionsäure.

14. Verfahren nach Anspruch 13, dadurch gekennzeichnet, daß der organische Stabilisator 0,01 bis 5 Gew.-%, bezogen auf das Gewicht des chlorierten Polymeren, und vorzugsweise 0,05 bis 2 Gew.-% je Gewicht ausmacht.

15. Verfahren nach einem der Ansprüche 1 bis 14, dadurch gekennzeichnet, daß man mindestens einen mineralischen Stabilisator, ausgewählt aus den Hydrotalkiten und Dawsonit, zusetzt.

16. Verfahren nach Anspruch 15, dadurch gekennzeichnet, daß der mineralische Stabilisator bis zu 5 Gew.-%, bezogen auf das Gewicht des chlorierten Polymeren, und vorzugsweise 0,02 bis 2 Gew.-% je Gewicht ausmacht.